# EUROPEAN PATENT SPECIFICATION

(11) **EP 0 457 594 B1**
(45) Date of publication and mention of the grant of the patent: **15.01.1997**
(21) Application number: 91304412.9
(22) Date of filing: 16.05.1991
(51) Int. Cl.: H02P 3/14, H02P 6/24, B60L 7/10, B60L 11/18

(54) **A regenerative brake device for electric motor vehicles**
Nutzbremseinrichtung für Fahrzeuge mit elektrischem Antriebsmotor
Dispositif de freinage par récupération pour moteurs électriques de véhicules

(30) Priority: 16.05.1990 JP 51139/90; 18.03.1991 JP 78551/91
(43) Date of publication of application: 21.11.1991
(73) Proprietor: HONDA GIKEN KOGYO KABUSHIKI KAISHA, Minato-ku Tokyo (JP)
(72) Inventor: Kawashima, Yoshinori, Wako-shi, Saitama (JP); Tamaki, Kenji, Wako-shi, Saitama (JP); Motodate, Shoji, Wako-shi, Saitama (JP); Nakazawa Yoshihiro, Wako-shi, Saitama (JP); Toriyama, Masayuki, Wako-shi, Saitama (JP); Maeda, Noriyuki, Wako-shi, Saitama (JP); Osanai, Yoshimi, Wako-shi, Saitama (JP)
(74) Representative: Tomlinson, Kerry John

(56) References cited:
- EP-A- 0 280 478
- GB-A- 2 159 011
- JP-A- 2 036 701
- US-A- 4 544 868
- PATENT ABSTRACTS OF JAPAN vol. 010, no. 367 (E-462)9 December 1986

## Description

This invention relates to a regenerative brake device for an electric motor vehicle.

As conventionally known, an electric motor vehicle has mounted thereon an electric motor powered by a battery to drive and run the vehicle and it is common to employ electric braking to utilize kinetic energy of the vehicle to charge its battery.

As described in Japanese Patent Application Laid-Open No. 2-36701, a regenerative brake device employed for electric motor vehicles of this type has provided between an electric motor and a battery a battery charging device with switch elements bridge-wired thereto to, when braking is applied, output control pulse signals to the battery charging circuit to make the latter switch on and off and, thereby, charge the battery with power generated by the motor.

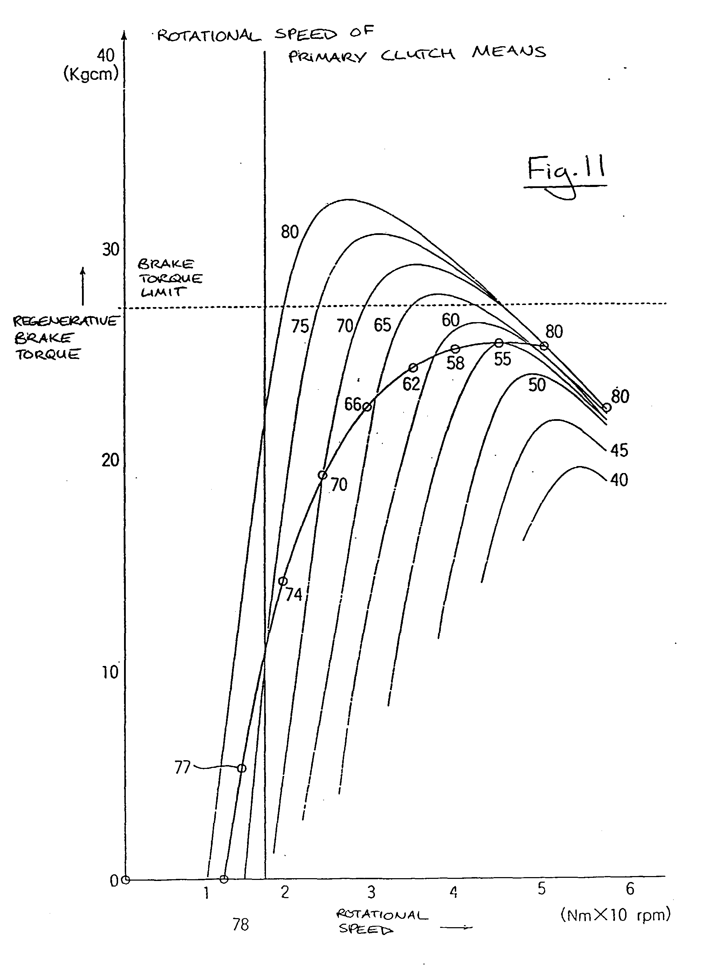

When a duty factor of control pulse signals input to a battery charging circuit is constant as it is in a regenerative brake device of the type as described in the above, however, braking power relative to the rotation of a motor inevitably presents upwardly-projected parabolic characteristics (Fig. 11). When these characteristics reach their maximum, braking power becomes excessive and causes the driving comfort of a vehicle to be impaired during braking.

It may be conceived to solve the above-described problem by selecting a duty factor of control pulse signals in a range to avoid braking power becoming excessive at its maximum. However, such an attempt may only lead to yet another problem as it causes braking power presenting upwardly-projected parabolic characteristics to lower in ranges of high-speed and low-speed rotation to a level not allowing braking power to be sufficient in a high-speed range.

In view of the above, this invention has its purpose to provide a regenerative brake device for electric motor vehicles which can gain braking power with characteristics increasing as the rotation of an electric motor gains in speed and realizes higher driving comfort and braking performance with enough braking power gained with its electric motor in high-speed rotation.

To solve the above-described problem, this invention provides a regenerative brake device for an electric motor vehicle, comprising a driving wheel and an electric motor linked with each other through a power transmission system and a battery charging circuit provided between said electric motor and a battery to switch on and off and effect regenerative braking in correspondence to a duty factor of control pulse signals input thereto, the graph of the braking torque presenting the shape of an upwardly closed parabola relative to the rotational speed of the motor for a constant duty factor, characterized in that, in a speed range in which a constant high duty factor would cause the braking torque to exceed a predetermined level, the duty factor of control pulse signals input to said battery charging circuit is set to be small at the high-speed end of said range and to increase with decreasing speed, such that braking torque decreases with decrease in the rotation rate of the shaft of said electric motor in said speed range, but said braking torque does not exceed said predetermined level in said speed range, and such that the graph of the braking torque presents the shape of an upwardly closed parabola relative to the rotational speed of the motor.

According to a preferred feature, a regenerative brake device for an electric motor vehicle can be structured with a primary clutch means provided in its power transmission system to correspond to the rotation of the shaft of said electric motor and to disengage said power transmission system when the rotation of the latter slows down below a predetermined speed.

A regenerative brake device for electric motor vehicles as described in the above can be structured further with a secondary clutch means provided to its power transmission system in parallel to said primary clutch means to correspond to the rotation of said driving wheel and to engage said power transmission system in a range of rotation exceeding a rotation speed slower than the rotation speed allowing the primary clutch means to disengage.

Further yet, a regenerative brake device for electric motor vehicles according to the present invention can be equipped with a continuously variable transmission provided in its power transmission system to effect regenerative braking with said battery charging circuit while shifting to its high deceleration ratio side.

In a preferred embodiments, the present invention has a power transmission system comprising provided in parallel a primary clutch means arranged to engage a power transmission means between said motor and driving wheel in a state exceeding a predetermined primary rotational speed to transmit a driving torque from said motor to said driving wheel and a secondary clutch means arranged to engage said power transmission means in a state exceeding a predetermined secondary rotational speed slower than said predetermined primary rotational speed of said primary clutch means.

Moreover, a regenerative brake device for electric motor vehicles according to the present invention with a primary clutch means provided in its power transmission system to effect its engagement in correspondence to the rotation of an electric motor exceeding its predetermined speed can apply regeneration braking without fail in a range with the electric motor in high-speed rotation and realize efficient recovery of energy.

The secondary clutch means provided in parallel to said primary clutch means to correspond to the rotation of the driving wheel can be structured to effect its engagement at a rotational speed slower than the rotational speed allowing the primary clutch means to effect its engagement. Thus structured, a regenerative brake device for electric motor vehicles according to the present invention realizes efficiency recovery of energy.

The power transmission device according to preferred embodiments of the present invention has provided between a driving wheel and a motor a primary clutch means allowing said motor to transmit therethrough its driving power to said driving wheel in a state of normal running with said motor driving said driving wheel and, when driving power is generated by the rear wheel in a state of braking or deceleration, keeping said driving wheel and said motor in engagement with a secondary clutch means until they reach a slow speed range. With this structure, the motor serves as a resistor to decelerate vehicle running and keep driving comfort and realize excellent performance in braking and driving deceleration.

Another characteristic aspect of a regenerative brake device for electric motor vehicles according to the present invention is the provision of a continuously variable transmission in the power transmission system to effect regenerative braking while shifting to its high-speed ratio side, allowing the electric motor to accelerate even when the driving wheel slows down in speed and, accordingly, raising efficiency of energy recovery.

Embodiments of the present invention will now be described by way of example only and with reference to the accompanying drawings.

Fig. 1 is a side view of a regenerative brake device embodying the present invention showing its disposition in a vehicle.

Fig. 2 is a cross-sectional view of the same regenerative brake device.

Fig. 3 is a view showing the construction of a secondary clutch.

Fig. 4 is a view showing the construction of a primary clutch.

Fig. 5 is a circuit diagram of the same regenerative brake device.

Fig. 6 is a flow chart showing steps of processing for the same regenerative brake device.

Figs. 7a and 7b are drawings showing the primary elements of the same regenerative device.

Fig. 8 is a drawing showing the primary elements of the same regenerative device in another form of their application.

Figs. 9a and 9b are drawings showing the primary elements of the same regenerative device in yet other forms of their respective application.

Fig. 10 is a drawing showing another embodiment of the present invention showing their primary elements in cross section.

Fig. 11 is a chart showing the deceleration characteristics of the deceleration torque relative to the rotation of the electric motor with its duty factor as a parameter.

Fig. 12 is a chart showing duty factor characteristics of control signals.

Fig. 13 is a functional chart showing an electric current generated at the electric motor.

The numeral 11 indicates a vehicle frame presenting a substantially U shape as seen from its sides and provided with a front frame 11f, a center frame 11d and a rear frame 11r. This vehicle frame 11 is covered with a resin-made body 21 having a front cover 21f, a leg shield 21a, a step floor 21b, a rear cover 21c and an under cover 21d.

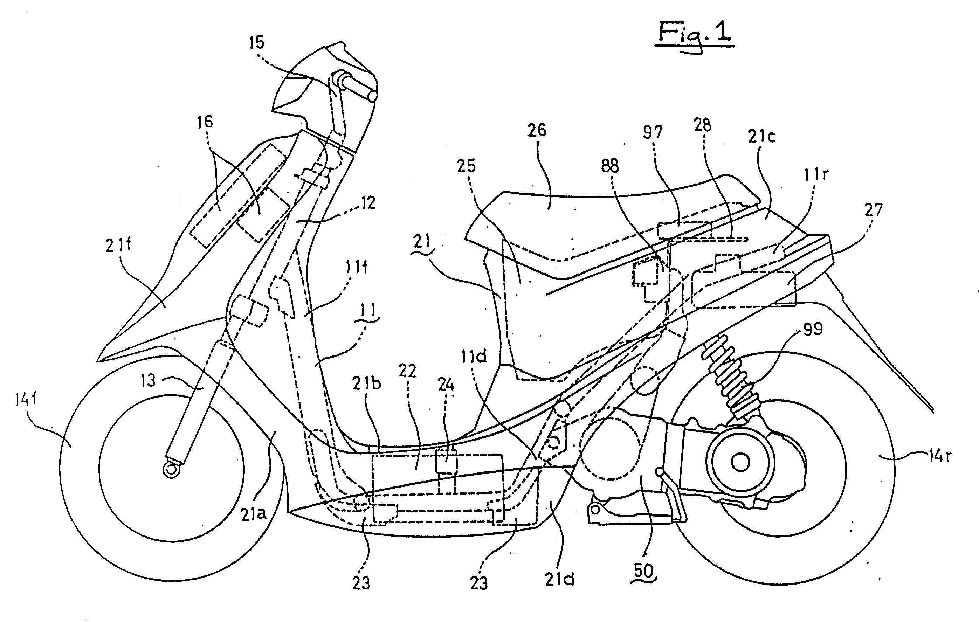

The vehicle frame 11 has fixed to the front section of the front frame 11f a head pipe 12 to which a front wheel 14f is supported through a front fork 13 to be manipulated with a manipulation handlebar 15. Though not shown in Fig. 1, the manipulation handlebar 15 is equipped with an acceleration sensor 37 (Fig. 5) composed of such means as a potentiometer to detect a manipulating angle of its acceleration grip.

The head pipe is provided at its front section with a control box 16 having its front section covered with the front cover 21f. Inside the control box, there are housed a controller 49 composed of such elements as an ECU (electronic control unit) to be described herein later.

The vehicle frame 11 has a battery box 22 provided to the center frame 11d having a power swing unit 50 supported thereto with a pivot shaft to allow its swing movement. As described herein later, the power swing unit 50 is structured with such elements as an electric motor 52 housed in a casing 51 which rotatably supports a rear wheel (driving wheel) 14r at its rear end. Designated with a numeral 99 here is a cushion unit provided between the rear section of the power swing unit 50 and the vehicle frame 11.

The battery box 22 is mounted on a battery holder secured to the center frame 11d with a belt 24. The battery box accommodates therein a plurality of batteries 36 (Fig. 5) which, wired either in parallel or serially, are connected to such means as a driving circuit described later. Though not shown in the drawings, the battery holder 23 is composed of a plate element suspended in the width direction of the vehicle under the center frame 11d. The battery box 22 mounted on this battery holder 23 has provided thereon a step floor 21b fitted with the belt 24.

The vehicle frame 11 has provided to the rear frame 11r the rear cover 21c formed with a hollow cylindrical element opening at its upper section covered with the seat 26 to close said opening. The seat 26 is fitted to the upper section of the rear cover 21c with such means as a hinge to close (Fig. 1) said opening and allow seating thereon and leave said opening uncovered when it is pulled down toward its front end.

Positioned above the rear wheel off to the front, the rear cover 21c accommodates therein a trunk box 25 and a charging box 27 set in the front and rear thereof. The trunk box 25 opens at its upper section covered with the above-described seat 26 and has a size enough to store a crash helmet.

The charging box 27 has its front section upwardly projecting to present a substantially L shape in a side-view and has its front section opening. The charging box 27 accommodates therein such an element as a charger to charge with a commercial power supply source and its front opening covered with a lid 28. The lid 28 has provided thereto the charging circuit 97 which, with the charger and other elements, are connected to the batteries 36.

In Fig. 1, a numeral 88 designates an air intake duct provided inside the rear cover 21c. This air intake duct 88 has one of its ends linked to a cooling air inlet of the power swing unit 50 and the other opening inside the rear cover 21c.

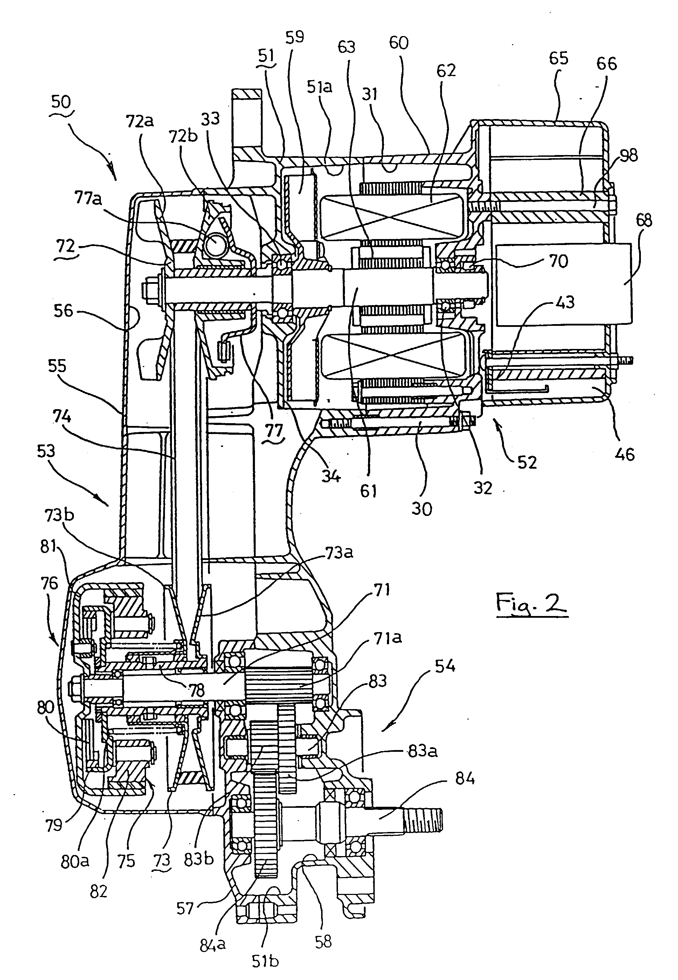

As shown in Fig. 2, the power swing unit 50 has integrally assembled thereinto the casing 51 supported to the vehicle frame 11 at its front end in a manner to allow its swinging movement and the electric motor 52, a continuously variable transmission 53 and a final reduction gear mechanism 54. Made of such metal as aluminum, the casing is cast to have a recess 51a on its right side of its front and a recess 51b on the left side of its rear section.

The casing 51 has formed in its front right side recess 51a a motor box 31 to accommodate the electric motor 52 with its motor casing fixed thereto, in its rear left side recess 51b a gear box 58 to accommodate the final reduction gear mechanism 54 with its bearing element 57 fixed thereto and at its left side section a power transmission box 56 to accommodate the continuously variable transmission 53 with a side cover 55 fixed thereto. The motor box 31 and the power transmission box 56 are linked through a ventilation hole 34 formed in the casing 51 near the bottom of the recess 51a to allow air ventilation therethrough. The power transmission box 56 opens to the air through a ventilation hole (not shown).

The motor casing 60 presents the shape of a bottomed cylinder opening at its end which, secured to the casing 51 with a bolt 30 to match the opening of the recess 51a in their position, constitutes the motor box 31. At the bottom of the motor casing 60, there is provided a bearing 32 which, together with a bearing 33 provided at the bottom of the recess 51a of the casing 51, rotatably supports a rotary shaft 61 inside the motor box 31.

The rotary shaft 61 has one of its ends passing through the bottom of the recess 51a to be linked with the continuously variable transmission 53 and the other passing through the bottom of the motor casing 60. The rotary shaft 61 has a cooling fan 59 provided at its section facing the ventilation hole 34 in the vicinity of the bottom of the recess 51a inside the motor box 31, and has secured thereto at the center of the motor box 31 a rotor composed of magnets, and further has mounted thereon a rotation sensor 70 secured to its end passing through the motor casing 60. As conventionally known, the rotor 63 is structured with magnets and positioned inside a stator 62.

Rotating integrally with the rotary shaft 61, the cooling fan conducts cooling air into the motor box 31 through the air intake duct 88 and sends out this cooling air to the power transmission box 56 through the ventilation hole 34. The rotation sensor 70 comprises magnets secured to the rotary shaft 61 and such magnetic sensitive elements as magnetoresistors or Hall elements fitted to the right surface of the motor casing 60 at its bottom and connected to the controller 49. This rotation sensor detects the position and rotation speed of the rotary shaft 61 and outputs detected signals to the controller 49.

The motor casing 60 has secured to its left surface on the side of the motor box three stator coils 62u, 62v and 62w (designated with numerals with no additional letters as necessary) which constitute the stator and secured to its right surface a heat sink 66. The three stator coils are Y-connected (Fig. 5) and connected to the driving circuit described herein later.

The heat sink 66 is formed in the shape of a hexagonal cylinder made of projection-molded aluminum alloy presenting a substantially hexagonal cross section and has formed on its inner circumference cooling fins (not shown). This heat sink 66 is secured to the motor casing 67 with a bolt 98 passing therethrough in its axial direction and screwed to the motor casing 60 and is covered over its outside with a cover 65 made of plastics. This cover 65 is fitted to the heat sink 66 with plastics 46 such as epoxy resins filled in a gap with the outer surface of the heat sink 66.

The heat sink has its six surface sections provided with as many field effect transistors (FET) 35a, 35b, 35c, 35d, 35e and 35f (designated with numerals without additional letter as necessary) to constitute the driving circuit (battery charging circuit) 64 and provided on its inner circumference a capacitor 68 to stabilize a power supply. Though not shown in the drawings, there is provided between this capacitor and the inner circumference of the heat sink 66 a cooling air passage linked with the air intake duct 88 and having said cooling fins projecting therein.

The continuously variable transmission 53 is structured with a belt 74 suspended between a driving pulley 72 and a driven pulley 73. The driving pulley is provided to the rotary shaft 61 of the electric motor 52 and the driven pulley 73 is secured to a sleeve 78 rotatably mounted on an input shaft 71 of the final reduction gear mechanism 54. This driven pulley 73 passes through a primary centrifugal clutch means 75 and a secondary centrifugal clutch means 76 provided in parallel to be linked with the input shaft 71.

The driving pulley 72 is structured with a fixed face gear 72a secured to the rotary shaft 61 and a movable face gear 72b mounted on the rotary shaft 61 slidably in its axial direction. This driving pulley 72 shifts in its axial direction with its movable face gear driven by a pressure regulator mechanism 77 provided with a weight 77a to change the diametrical size of the belt 74 in correspondence to the rotation rate of the rotary shaft 61.

Similarly, the driven pulley 73 is structured with a fixed face gear 73a secured to the sleeve 78 and a movable face gear 73b mounted on the sleeve slidably in its axial direction. This driven pulley 73 is urged toward the fixed face gear 73a under the influence of a compression spring 80a disposed in a gap between the movable face gear 73b and a clutch outer 79 of the secondary centrifugal clutch means 76 to have its movable face gear 73b shifting and changing the diametrical size of the belt in correspondence to a change in the diametrical size of the belt around the driving pulley 72.

The secondary centrifugal clutch means 76 is structured with the clutch outer 79 fixed to the sleeve 78 and a clutch inner 80 fixed to the clutch outer 81 of the primary clutch means 75. This secondary clutch means 76 effects its engagement and disengagement in correspondence to the rotation speed of the clutch outer 81 and, accordingly, the rotation speed of the rear wheel 14r. With the clutch outer 81 fixed to the input shaft 71 and the clutch inner 82 provided to the clutch outer 79 of the secondary centrifugal clutch means 76, the primary centrifugal clutch means effects its engagement and disengagement in correspondence to the rotational speed of the clutch outer 79 and, accordingly, the rotational speed of the rotary shaft 61 of the electric motor 52. The primary centrifugal clutch means 75 starts functioning in a rotational range slower than the rotation of the electric motor 52 at maximum efficiency and continues its engagement in a range exceeding this rotational speed, and the secondary centrifugal clutch means 76 starts functioning at a rotational speed slower, e.g. by about 400 rpm, than the rotational speed effecting the engagement of the primary centrifugal clutch means 75 and continues its engagement in a range exceeding this rotational speed.

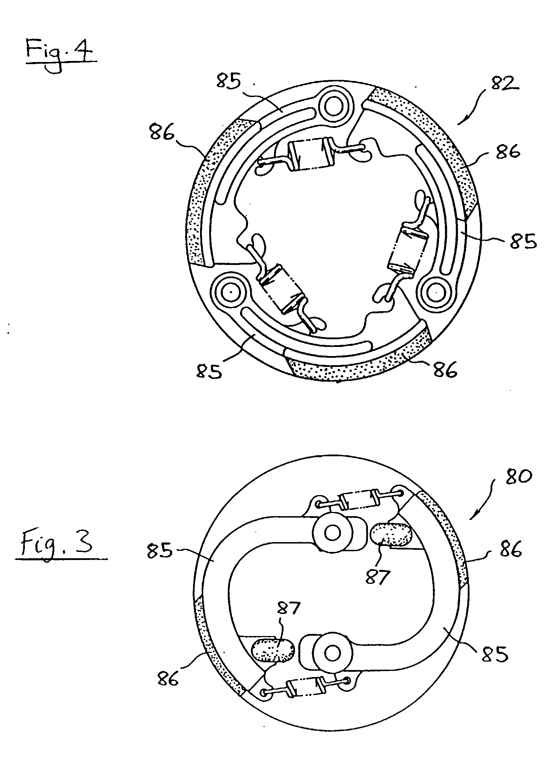

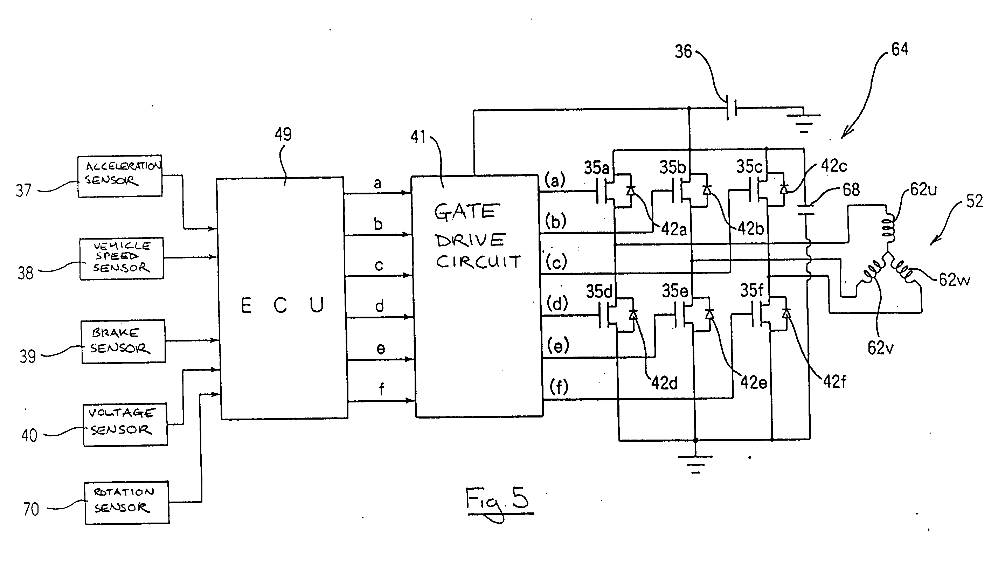

As shown in Fig. 3, the secondary centrifugal clutch means 76 supports to the clutch outer 81 of the primary centrifugal clutch means 75 two substantially U-shaped arms 85 provided with butts 86 frictionally contacting with the clutch outer 79 and weights 87 mounted at their top and springs provided in suspension between said arms 85 to energize said butts 86 in their direction away from the clutch outer 79. Similarly, the clutch inner 82 of the primary centrifugal clutch means 75, as shown in Fig. 4, supports to the clutch outer 79 of the secondary centrifugal clutch means 76 three part-circular arms 85 having securely fixed thereto butts 86 frictionally contacting with the clutch outer 81 and springs provided in suspension between said arms 85 to energize said butts 86 in their direction away from the clutch outer 81.

The final reduction gear mechanism 54 has a gear 71a secured to the input shaft 71 and gears 83a and 83b secured to an intermediate shaft 83 and a gear 84a secured to the output shaft 84. The gear 71a engages with the gear 83a and the gear 83b with the gear 84a. The input shaft 71 is rotatably supported to the casing 51 and the bearing element 57 and has its left end projecting inside the power transmission box 56 to be linked with the continuously variable transmission 53. The output shaft 84 projects through the right side of the casing 51 having fixed to its end the rear wheel 14r.

The controller 49 is structured with such elements as an ECU. As shown in Fig. 5 the controller 49 is connected with the acceleration sensor 37, a speed sensor 38, a brake sensor 39, a voltage sensor 40 and the rotation sensor 70 described above and further with a gate drive circuit 41. The acceleration sensor 37 detects a manipulation angle of the acceleration grip. Similarly, the brake sensor 39 detects a brake pedal in manipulation and the voltage sensor 40 a voltage of the batteries 36.

The controller 49 calculates and processes output signals from said sensors to output pulse width modulation signals (PWM corresponding to control pulse signals) a, b, c, d, e and f. As described later, this controller 49, judging the state of vehicle braking, outputs to the gate drive circuit predetermined PWM signals at the time of braking and PWM signals with a duty factor corresponding to a vehicle speed and a manipulation angle of the acceleration grip at the time of normal driving (running other than braking). PWM signals explained in the above have a frequency exceeding twice the maximum frequency of an alternating current output by the electric motor in its regenerative operation as described herein later.

The gate drive circuit 41 has such an element as a step-up circuit and is connected to the batteries 36 and the driving circuit 64. This step-up circuit outputs driving signals to FETs 35 of the driving circuit 64 in correspondence to PWM signals a, b, c, d, e, and f output from the controller 49 (represented with the same designations of PWM signals for convenience).

The driving circuit 64, as shown in Fig. 5 is structured with said six FETs 35 Y-connected thereto and wired between positive and negative terminals (ground side) of the batteries with said capacitor in parallel thereto. These FETs have their gates connected to the gate drive circuit 41 and a source of FET 35a is connected with a drain of FET 35d, a source of FET 35b with a drain of FET 35e, a source of FET 35c and a drain of FET 35f and, further, drains of FETs 35a, 35b and 35c are connected with the positive terminal of the batteries 36 and sources of FETs 35d, 35e and 35f with the negative terminal of said batteries. These FETs 35 are connected with diodes 42a, 42b, 42c, 42d, 42e and 42f connected in inverse parallel thereto.

A regenerative brake device for electric motor vehicles according to the present invention works as described herein below.

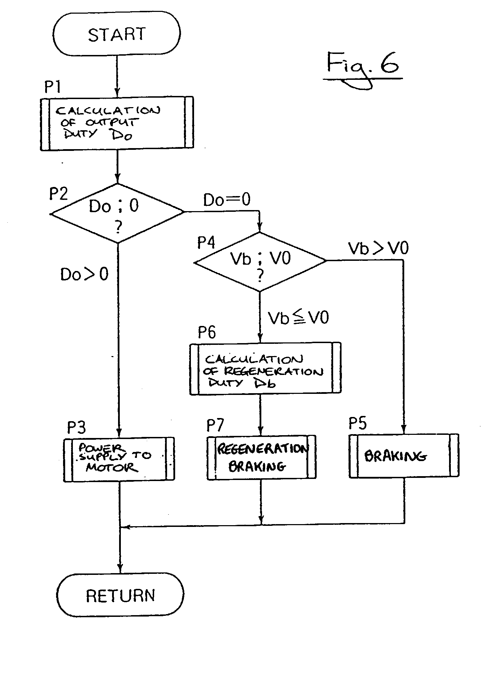

In this regenerative brake device, the electric motor is driven and controlled by repeated execution of a program shown in Fig. 6.

Firstly, a duty factor (output duty) of a current output (Do) to the electric motor 52 in normal operation is calculated at a step P1. This output duty Do has its value based on such elements as a deviation between a vehicle speed and a manipulation angle of the acceleration grip.

At the step P2, the output duty Do is judged to determine the state of vehicle braking based on its value. The step P2 judges vehicle driving as normal with a positive value of the output duty Do (Do>0) and executes its processing in a step P3 and as braking with a zero value of the output duty Do (Do=0) and executes its processing in a step P4.

It may be added that this step P2 can be replaced with a processing to judge signals from the brake switch detecting stepped-in operation of the brake pedal.

Executed at a step P3 is a processing to supply power to the electric motor or outputting of PWM signals a, b, c, d, e and f to the gate drive circuit 41 with the duty factor of PWM signals a, b and c set at 1 and the duty factor of PWM signals d, e and f set at said Do. The gate drive circuit 41 outputs driving signals to FETs 35 in correspondence to the PWM signals and FETs 35 switch on and off in correspondence to the received duty factor. Thus, the electric motor 52 has its stator coils supplied with alternating currents with a phase difference of 120 degrees therebetween and its output transmitted to the rear wheel (Fig. 11).

A step P4 judges the current voltage of the batteries from output signals from the voltage sensor 40 and executes processing in a step P5 when the battery voltage exceeds a predetermined voltage level and executes a processing in a step P6 when the batteries have their voltage Vb drop below a predetermined voltage VO which is a criterion determining the necessity for charging of the batteries 36, and is suitably set with factors such as the capacity of the batteries taken into account.

The step P5 outputs to the gate drive circuit 41 braking signals based on the duty factor of PWM signals a, b and c set at 0 and the duty factor of PWM signals d, e and f set at 1. In correspondence to these signals, the motor drive circuit 64 switchesoff FETs 35a, 35b and 35c and switcheson FETs 35d, 35e and 35f to supply power to the terminals of the stator coils 62. As power generated at these stator coils 62 has a phase deviation of 120 degrees, a charging current is blocked from flowing to the batteries 36 which, thus, are prevented from overcharging.

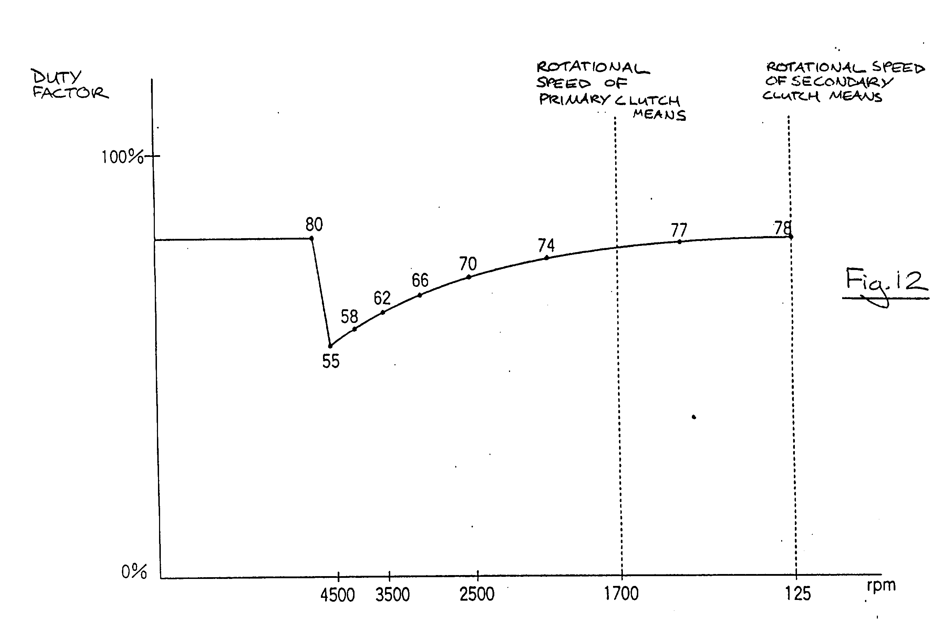

The step P6 judges the rotational speed of the electric motor 52 from output signals from the rotation sensor 70 and searches a regeneration braking duty Db through a data table shown Fig. 12 with this rotational speed of the electric motor 52 as an address. As a deceleration torque with the regenerative braking duty Db as a parameter presents characteristics relative to the rotational speed of the electric motor 52, the data table shown in Fig. 12 sets the characteristics of the deceleration torque gradually approaching a regulative torque (torque limit) as the motor 52 increases its rotation rate.

A regulative torque shown in Fig. 11 is set as a maximum transmission torque allowing power transmission without causing abnormality to such a power transmission means as the continuously variable transmission 53.

Next, a step P7 executes an output processing to effect regenerative braking. The regenerative braking is judged with the duty factor of PWM signals a, b and c set at 0 and the duty factor of PWM signals d, e and f at said level of Db. Thus, the motor drive circuit 64 switchesoff FETs 35a, 35b and 35c and switches on and off FETs 35d, 35e and 35f in correspondence to the regenerative braking duty Db to charge the batteries 36 with power generated at the electric motor 52 and decelerate the vehicle with a deceleration torque corresponding to the regenerative braking duty and the rotation of the electric motor 52.

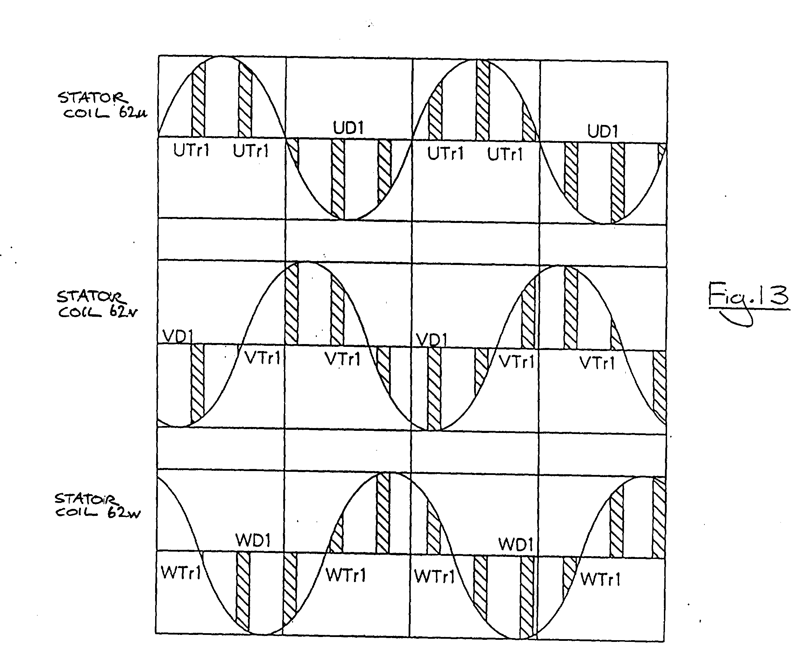

As shown in Fig. 13 a sine-wave current is generated at the stator coils 62u, 62v and 62w of the electric motor 52, PWM signals have a frequency twice as high as the maximum frequency of an alternating current generated by the electric motor 52 and occur in a phase where the FETs present their characteristics relative to said current as shown in the drawing. Therefore, the stator coils 62u, 62v and 62w are made equal in heat generation.

At the time of this regenerative braking, the deceleration torque, as clear from Figs. 11 and 12, has its maximum value regulated to a value less than the torque limit, so that the belt 74 can be prevented from troubles such as its accidental jamming in the continuously variable transmission 53. Since the deceleration torque increases as the electric motor 52 gains its rotational speed, the braking performance of the electric motor can be raised in high-speed rotation, which, in turn, keeps driving comfortable even when a brake is applied.

The electric motor 52 and the rear wheel 14r have provided in parallel thereto the primary clutch means 75 to correspond to the rotational speed of the electric motor 52 and the secondary clutch means 76 to correspond to the rotational speed of the rear wheel 14r. Said primary clutch means 75 effects its engagement in a range exceeding the maximum rotation speed of the electric motor 52 as its start-up criterion and the secondary clutch means 76 effects its engagement in a range exceeding a rotational speed slower than the primary clutch means as its start-up criterion. This enables the electric motor 52 to drive efficiently to save power and recycle the vehicle kinetic energy efficiently at the time of braking.

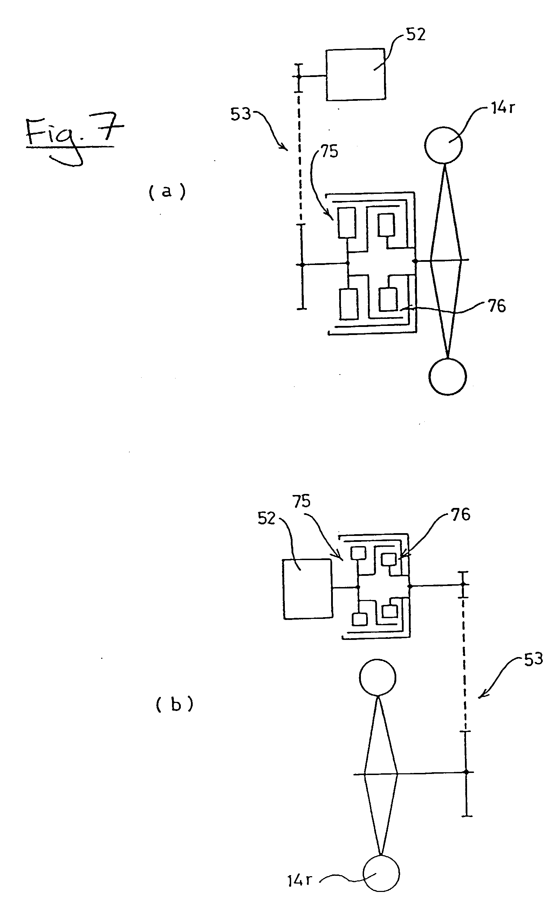

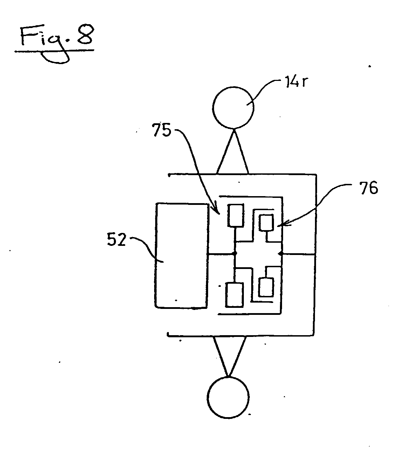

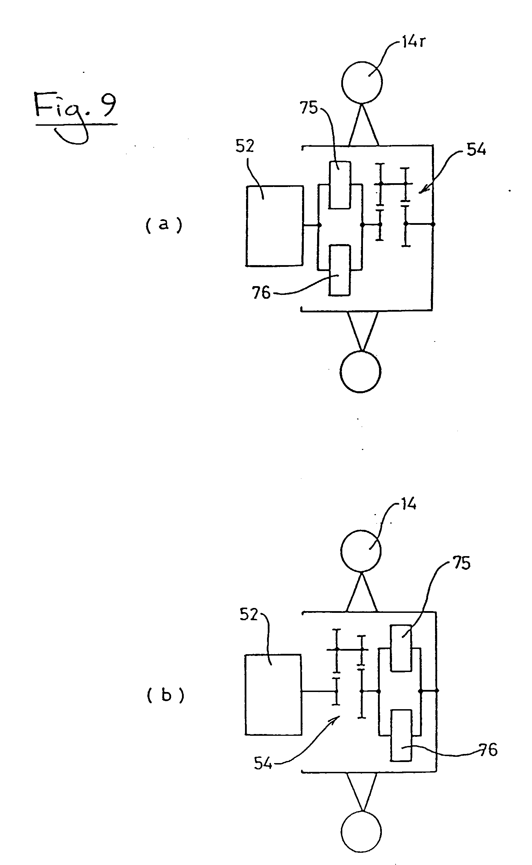

As shown in Fig. 7a, said primary clutch means 75 and secondary clutch means 76 can be assembled to the rear wheel 14r and it is also possible to set the clutch means 75 and 76 to the electric motor 52 as shown in Fig. 7b. These clutch means 75 and 76 may also be assembled to the rear wheel 14r together with the electric motor 52 (Fig. 8). It is further possible to assemble said clutch means 75 and 76 to the rear wheel 14r with the final reduction gear mechanism 54. In the above structure setting the clutch means with the final reduction gear mechanism 54, it is possible to provide the final reduction gear mechanism 54 between the clutch means 75 and 76 and the electric motor 52 as shown in Fig. 9b and the final reduction gear mechanism 54 between the clutch means 75 and 76 and the rear wheel 14r as shown in Fig. 9a.

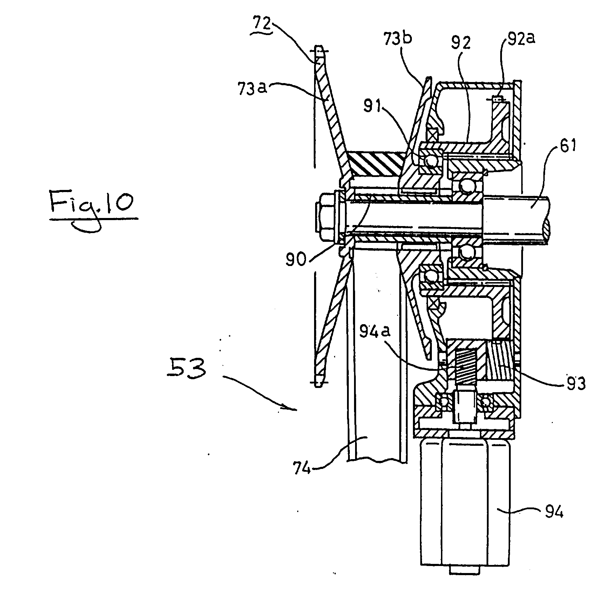

Shown in Fig. 10 is another embodiment of the present invention of which elements and parts equivalent to those of the above-described embodiment are represented with the same designations without duplicated explanations thereof.

This embodiment employs a motor 94 provided to the continuously variable transmission 53 as an actuator to shift the transmission ratio and control the transmission ratio of the continuously variable transmission 53 with this motor 94.

As shown in Fig. 10, the rotary shaft 61 of the electric motor 52 has provided thereover a sleeve 90 on which the movable face gear 73b of the driving pulley 72 is supported slidably in its axial direction. The movable face gear 73b receives a worm element 92 engaged therewith through the bearing 91 rotatably relative to each other in their respective rotational direction and integrally slidably in their axial direction.

The worm element has formed thereon a gear section 92a which engages with the intermediate gear 93. The intermediate gear 93 receives engaged therein a worm element 94a securely fitted to the rotary shaft of an electric motor 94. Connected to a drive circuit, this electric motor 94 is driven by control signals output from the controller 49.

In this embodiment of the present invention, the belt-strapping diameter of the driving pulley 72 is made to decrease in correspondence to the deceleration of vehicle driving at the time of regenerative braking to decelerate the continuously variable transmission 53 and, accordingly gradually increase a rotational speed transmitted from the driven pulley 73 to the driving pulley 72. When the vehicle slows down in its driving speed, therefore, the rotary shaft 61 of the electric motor 52 is kept in high-speed rotation, realizing high efficiency of braking regeneration and efficiently recovering the kinetic energy of the vehicle.

According to the present invention as described in the above, the duty factor of control pulse signals are set low when the electric motor is rotating at a high speed and braking power is increased within a rotation range not exceeding a predetermined value, thereby presenting good braking performance which does not impair driving comfort and making it possible to gain great braking power in high-speed driving of the vehicle.

According to a preferred feature, the power transmission system is provided with the primary clutch means to correspond to the rotation of the electric motor which effects its regenerative braking without fail when the electric motor is rotating at a high speed and,therefore, makes it possible to recover the kinetic energy of the vehicle.

The present invention preferably has in parallel to said primary clutch means the secondary clutch means provided in a manner to effect its engagement at a rotation speed slower than that of the primary clutch means, so that the kinetic energy of the vehicle can be efficiently recovered when a brake is applied.

The continuously variable transmission effects regenerative braking while decelerating, realizing enough power generation when the vehicle slows down and making it possible to recover the kinetic energy of the latter efficiently.

## Claims

1. A regenerative brake device for an electric motor vehicle, comprising a driving wheel (14r) and an electric motor (52) linked with each other through a power transmission system (53, 54, 75, 76) and a battery charging circuit (97) provided between said electric motor and a battery (36) to switch on and off and effect regenerative braking in correspondence to a duty factor of control pulse signals input thereto, the graph of the braking torque presenting the shape of an upwardly closed parabola relative to the rotational speed of the motor (52) for a constant duty factor, characterized in that, in a speed range in which a constant high duty factor would cause the braking torque to exceed a predetermined level, the duty factor of control pulse signals input to said battery charging circuit (97) is set to be small at the high-speed end of said range and to increase with decreasing speed, such that braking torque decreases with decrease in the rotation rate of the shaft (61) of said electric motor in said speed range, but said braking torque does not exceed said predetermined level in said speed range, and such that the graph of the braking torque presents the shape of an upwardly closed parabola relative to the rotational speed of the motor.

2. A regenerative brake device as claimed in claim 1, wherein the duty factor increases with decrease in rotation speed within a lower-speed range than said speed range.

3. A regenerative brake device as claimed in claim 1 or 2, wherein said device has provided in said power transmission system a primary clutch means (75) arranged to disengage said power transmission system when the rotation of the shaft (61) of said electric motor (52) slows down below a predetermined speed.

4. A regenerative brake device as claimed in claim 3, wherein said power transmission system comprises a secondary clutch means (76) in parallel with said primary clutch means (75) and connected to rotate at a rate corresponding to the rotation of said driving wheel (14r), said secondary clutch means being arranged to engage said power transmission system at a clutch rotation speed slower than that at which the primary clutch means engages and to remain engaged at speeds higher than the latter.

5. A regenerative brake device as claimed in claim 1, 2, 3 or 4 wherein said power transmission system comprises a continuously variable transmission (53) to effect regenerative braking with said battery charging circuit (97) while shifting to a high reduction ratio.

6. A regenerative brake device as claimed in claim 1 or 2, wherein said device has provided in parallel in said power transmission system a primary clutch means (75) arranged to engage said power transmission system between said motor (52) and driving wheel (14r) in a state exceeding a predetermined primary rotational speed to transmit a driving torque from said motor to said driving wheel and a secondary clutch means (76) arranged to engage said power transmission system in a state exceeding a predetermined secondary rotational speed slower than said predetermined primary rotational speed of said primary clutch means.

7. A regenerative brake device as claimed in claim 6 wherein said primary clutch means (75) is coupled to said motor (52) and is arranged to disengage said power transmission system when the rotation of the shaft (61) of said electric motor slows down below a predetermined speed.

8. A regenerative brake device as claimed in claim 6 or 7 wherein said secondary clutch means (76) is connected to rotate at a rate corresponding to the rotation of said driving wheel (14r), said secondary clutch means being arranged to engage said power transmission system at a clutch rotation speed slower than that at which the primary clutch means (75) engages and to remain engaged at speeds higher than the latter.

9. A regenerative brake device as claimed in claim 6, 7 or 8 wherein said power transmission system comprises a belt-driven continuously variable transmission (53).

## Patentansprüche

1. Regenerative Bremsvorrichtung für ein elektromotorisches Fahrzeug, umfassend ein Antriebsrad (14r) und einen Elektromotor (52), welche miteinander über ein Kraftübertragungssystem (53, 54, 75, 76) verbunden sind, und einen Batterieladeschaltkreis (97), welcher zwischen dem Elektromotor und einer Batterie (36) vorgesehen ist, um an- und auszuschalten und regeneratives Bremsen in Übereinstimmung mit einem Tastverhältnis von Steuerpulssignalen, welche diesem zugeführt werden, zu bewirken, wobei der Graph des Bremsdrehmoments für ein konstantes Tastverhältnis bezüglich der Drehgeschwindigkeit des Motors (52) die Gestalt einer nach oben geschlossenen Parabel aufweist,
dadurch gekennzeichnet, daß in einem Geschwindigkeitsbereich, in welchem ein konstantes hohes Tastverhältnis es bewirken würde, daß das Bremsdrehmoment einen vorbestimmten Wert überschreitet, das Tastverhältnis der dem Batterieladeschaltkreis (97) zugeführten Steuerpulssignale an dem Hochgeschwindigkeitsende des Bereichs klein eingestellt ist und mit abnehmender Geschwindigkeit derart zunimmt, daß das Bremsdrehmoment mit Abnahme der Drehrate der Welle (61) des Elektromotors in dem Geschwindigkeitsbereich abnimmt, das Bremsdrehmoment jedoch den vorbestimmten Wert in dem Geschwindigkeitsbereich nicht überschreitet, und derart, daß der Graph des Bremsdrehmoments bezüglich der Drehgeschwindigkeit des Motors die Gestalt einer nach oben geschlossenen Parabel aufweist.

2. Regenerative Bremsvorrichtung nach Anspruch 1, worin das Tastverhältnis innerhalb eines Geschwindigkeitsbereichs unterhalb des Geschwindigkeitsbereichs mit Abnahme der Drehgeschwindigkeit zunimmt.

3. Regenerative Bremsvorrichtung nach Anspruch 1 oder 2, worin die Vorrichtung in dem Kraftübertragungssystem ein Primärkupplungsmittel (75) aufweist, welches dazu ausgelegt ist, das Kraftübertragungssystem auszukuppeln, wenn sich die Drehung der Welle (61) des Elektromotors (52) unter eine vorbestimmte Geschwindigkeit verlangsamt.

4. Regenerative Bremsvorrichtung nach Anspruch 3, worin das Kraftübertragungssystem ein Sekundärkupplungsmittel (76) aufweist, welches parallel zu dem Primärkupplungsmittel (75) ist und derart verbunden ist, daß es mit einer der Drehung des Antriebsrads (14r) entsprechenden Rate dreht, wobei das Sekundärkupplungsmittel dazu ausgelegt ist, das Kraftübertragungssystem bei einer Kupplungsdrehgeschwindigkeit einzukuppeln, welche langsamer ist als die, bei der das Primärkupplungsmittel einkuppelt, und bei Geschwindigkeiten, die größer sind als die letztere, eingekuppelt bleibt.

5. Regenerative Bremsvorrichtung nach Anspruch 1, 2, 3 oder 4, worin das Kraftübertragungssystem ein kontinuierlich variierbares Getriebe (53) umfaßt, um regeneratives Bremsen mit dem Batterieladeschaltkreis (97) zu bewirken, während auf ein großes Untersetzungsverhältnis geschaltet wird.

6. Regenerative Bremsvorrichtung nach Anspruch 1 oder 2, worin die Vorrichtung in dem Kraftübertragungssystem parallel aufweist: ein Primärkupplungsmittel (75), welches dazu ausgelegt ist, das Kraftübertragungssystem zwischen dem Motor (52) und dem Antriebsrad (14r) in einem eine vorbestimmte primäre Drehgeschwindigkeit überschreitenden Zustand einzukuppeln, um ein Antriebsdrehmoment von dem Motor auf das Antriebsrad zu übertragen, sowie ein Sekundärkupplungsmittel (76), welches dazu ausgelegt ist, das Kraftübertragungssystem in einem Zustand einzukuppeln, welcher eine vorbestimmte sekundäre Drehgeschwindigkeit überschreitet, die langsamer ist als die vorbestimmte primäre Drehgeschwindigkeit des Primärkupplungsmittels.

7. Regenerative Bremsvorrichtung nach Anspruch 6, worin das Primärkupplungsmittel (75) mit dem Motor (52) gekoppelt ist und dazu ausgelegt ist, das Kraftübertragungssystem auszukuppeln, wenn sich die Drehung der Welle (61) des Elektromotors unter eine vorbestimmte Geschwindigkeit verlangsamt.

8. Regenerative Bremsvorrichtung nach Anspruch 6 oder 7, worin das Sekundärkupplungsmittel (76) derart verbunden ist, daß es mit einer Rate dreht, die der Drehung des Antriebsrads (14r) entspricht, wobei das Sekundärkupplungsmittel dazu ausgelegt ist, das Kraftübertragungssystem bei einer Kupplungsdrehgeschwindigkeit einzukuppeln, welche langsamer ist als die, bei welcher das Primärkupplungsmittel (75) einkuppelt, und bei Geschwindigkeiten eingekuppelt zu bleiben, welche größer als die letztere sind.

9. Regenerative Bremsvorrichtung nach Anspruch 6, 7 oder 8, worin das Kraftübertragungssystem ein riemengetriebenes kontinuierlich variierbares Getriebe (53) umfaßt.

## Revendications

1. Dispositif de freinage par récupération pour un véhicule à moteur électrique, comportant une roue d'entraînement (14r) et un moteur électrique (52) reliés l'un à l'autre par l'intermédiaire d'un système de transmission de puissance (53, 54, 75, 76) et un circuit de charge de batterie (97) agencé entre ledit moteur électrique et une batterie (36) pour activer et désactiver et effectuer un freinage par récupération en fonction d'un facteur d'utilisation de signaux d'impulsion de commande introduits dans celui-ci, le graphique du couple de freinage ayant la forme d'une parabole fermée vers le haut en fonction de la vitesse de rotation du moteur (52) pour un facteur d'utilisation constant, caractérisé en ce que, dans une plage de vitesses dans laquelle un facteur d'utilisation constant élevé peut amener le couple de freinage à dépasser un niveau prédéterminé, le facteur d'utilisation des signaux d'impulsion de commande émis vers ledit circuit de charge de batterie (97) est établi pour être petit au niveau de l'extrémité de vitesse élevée de ladite plage et pour augmenter lorsque la vitesse diminue, de telle sorte que le couple de freinage diminue avec la diminution de la vitesse de rotation de l'arbre (61) dudit moteur électrique dans ladite plage de vitesses, et ledit couple de freinage ne dépasse pas ledit niveau prédéterminé situé dans ladite plage de vitesses, et de telle sorte que le graphique du couple de freinage a la forme d'une parabole fermée vers le haut en fonction de la vitesse de rotation du moteur.

2. Dispositif de freinage par récupération selon la revendication 1, dans lequel le facteur d'utilisation augmente avec la diminution de la vitesse de rotation dans une plage de vitesses plus faibles que ladite plage de vitesses.

3. Dispositif de freinage par récupération selon la revendication 1 ou 2, dans lequel ledit dispositif est muni, dans ledit système de transmission de puissance, de moyens d'embrayage primaire (75) agencés pour débrayer ledit système de transmission de puissance lorsque la rotation de l'arbre (61) dudit moteur électrique (52) tombe en dessous d'une vitesse prédéterminée.

4. Dispositif de freinage par récupération selon la revendication 3, dans lequel ledit système de transmission de puissance comporte des moyens d'embrayage secondaire (76) en parallèle avec lesdits moyens d'embrayage primaire (75) et est relié pour tourner à une vitesse correspondant à la rotation de ladite roue d'entraînement (14r), lesdits moyens d'embrayage secondaire étant agencés pour embrayer avec ledit système de transmission de puissance au niveau d'une vitesse de rotation d'embrayage plus lente que celle au niveau de laquelle les moyens d'embrayage primaire embrayent et pour rester embrayés au niveau de vitesses plus élevées que cette dernière.

5. Dispositif de freinage par récupération selon la revendication 1, 2, 3 ou 4, dans lequel ledit système de transmission de puissance comporte une transmission variable de manière continue (53) pour effectuer le freinage par récupération à l'aide dudit circuit de charge de batterie (97) tout en changeant vers un rapport de réduction élevé.

6. Dispositif de freinage par récupération selon la revendication 1 ou 2, dans lequel ledit dispositif est muni parallèlement audit système de transmission de puissance, de moyens d'embrayage primaire (75) agencés pour embrayer avec ledit système de transmission de puissance entre ledit moteur (52) et la roue d'entraînement (14r), dans un état dépassant une vitesse de rotation primaire prédéterminée pour transmettre un couple d'entraînement à partir dudit moteur vers ladite roue d'entraînement et des moyens d'embrayage secondaire (76) agencés pour embrayer avec ledit système de transmission de puissance dans un état dépassant une vitesse de rotation secondaire prédéterminée inférieure à ladite vitesse de rotation primaire prédéterminée desdits moyens d'embrayage primaire.

7. Dispositif de freinage par récupération selon la revendication 6, dans lequel lesdits moyens d'embrayage primaire (75) sont reliés audit moteur (52) et sont agencés pour être débrayés dudit système de transmission de puissance lorsque la rotation de l'arbre (61) dudit moteur électrique tombe en dessous d'une vitesse prédéterminée.

8. Dispositif de freinage par récupération selon la revendication 6 ou 7, dans lequel lesdits moyens d'embrayage secondaire (76) sont reliés pour tourner à une vitesse correspondant à la rotation de ladite roue d'entraînement (14r), lesdits moyens d'embrayage secondaire étant agencés pour embrayer avec ledit système de transmission de puissance au niveau d'une vitesse de rotation d'embrayage inférieure à celle au niveau de laquelle les moyens d'embrayage primaire (75) embrayent et restent embrayés au niveau de vitesses plus élevées que cette dernière.

9. Dispositif de freinage par récupération selon la revendication 6, 7 ou 8, dans lequel ledit système de transmission de puissance comporte une transmission (53) variable de manière continue, entraînée par courroie.
